# EUROPÄISCHE PATENTSCHRIFT

(11) **EP 0 409 014 B1**
(45) Veröffentlichungstag und Bekanntmachung des Hinweises auf die Patenterteilung: **19.05.1993**
(21) Anmeldenummer: 90112930.4
(22) Anmeldetag: 06.07.1990
(51) Int. Cl.: C10L 5/04, C10L 5/14

(54) **Verfahren für die Herstellung von Brennstoff-Briketts**
Process for the manufacture of fuel briquettes
Procédé de fabrication de briquettes de combustible

(30) Priorität: 15.07.1989 DE 3923445; 09.09.1989 DE 3930182
(43) Veröffentlichungstag der Anmeldung: 23.01.1991
(73) Patentinhaber: APPLIED INDUSTRIAL MATERIALS CORPORATION AIMCOR, Deerfield Illinois 60015 (US)
(72) Erfinder: Lask, Gert-Wilhelm, Dr. Dipl. Chem., D-6636 Berus (DE)
(74) Vertreter: Andrejewski, Walter

(56) Entgegenhaltungen:
- DE-A- 3 727 464
- GB-A- 897 755
- US-A- 4 111 755

## Beschreibung

Die Erfindung betrifft ein Verfahren für die Herstellung von Brennstoff-Briketts, insbesondere für die Erzeugung von Heizwärme, wobei ein nichtbackender feinkörniger Kohlenstoffträger, vorzugsweise Petrolkoks, und ein pechhaltiges Bindemittel gemischt werden sowie diese Ausgangsmischung zu Vorformlingen brikettiert wird und wobei aus den Vorformlingen durch eine verfestigende Wärmebehandlung die Brennstoff-Briketts gebildet werden. - Bei der Herstellung solcher Brennstoff-Briketts wird im allgemeinen mit sandfeinem Koks, vorzugsweise Petrolkoks, im Körnungsbereich von 0,05 bis 2 mm gearbeitet, und zwar mit unterschiedlichen Körnungsbändern in diesem Bereich. Der sandfeine Kohlenstoffträger kann auch aus nichtbackender Kohle bestehen oder diese aufweisen. Die Erfindung betrifft außerdem nach dem Verfahren hergestellte Brennstoff-Briketts. An die Brennstoff-Briketts der an gegebenen Zweckbestimmung werden in physikalischer Hinsicht besondere Anforderungen gestellt. Sie müssen beim Transport und bei der Verbrennung eine ausreichende Festigkeit aufweisen, sie dürfen weder zu heftig verbrennen, noch lediglich verglimmen. Das ist durch den Preßdruck bei der Brikettierung einstellbar.

Bei dem bekannten Verfahren, von dem die Erfindung ausgeht (DE-OS 37 27 464), wird mit von backender Kohle ausreichend freien Vorformlingen gearbeitet sowie eine Bindemittelbrikettierung durchgeführt. Soweit feinkörnige backende Kohle anwesend ist, ist ihre Menge so gering, daß sie zur Bindemittelbrikettierung praktisch nicht beiträgt. Die Wärmebehandlung erfolgt in einem beheizten Drehrohrofen, der in seinem unteren Teil so weit mit sandfeinem Koks gefüllt ist, daß die Wärmebehandlung in einem Kokstauchbett erfolgt. Das hat sich bewährt. Insbesondere genügen die so hergestellten Brennstoff-Briketts allen Anforderungen bei der Verbrennung. In bezug auf das Langzeitverhalten vor der Verbrennung sind die nach dem bekannten Verfahren hergestellten Brennstoff-Briketts jedoch verbesserungsfähig. Ihre mechanische Festigkeit nimmt bei der Lagerung mit der Zeit, unter Umständen störend, ab. Das wird darauf zurückgeführt, daß Luft in die Brennstoff-Briketts hineindiffundiert und, insbesondere bei Lagerung im Freien, auch Wasser eindringt, wodurch die Bindungskräfte des Gerüstes aus Petrolkoks beeinträchtigt werden.

Bei einem anderen Verfahren (GB 897 755) wird mit einer Bindemittelmischung aus Pech und Kohle gearbeitet, wobei diese Bindemittelmischung bei Umgebungstemperatur dem Kohlenstoffträger zugeführt wird.

Der Erfindung liegt die Aufgabe zugrunde, ein Verfahren für die Herstellung von Brennstoff-Briketts anzugeben, welches zu Brennstoff-Briketts führt, die nicht nur bei der Verbrennung allen Anforderungen genügen, sondern sich außerdem durch hervorragendes Langzeitverhalten auszeichnen, insbesondere auch beim Transport und bei Lagerung im Freien ihre Festigkeit nicht verlieren.

Zur Lösung dieser Aufgabe lehrt die Erfindung, daß als pechhaltiges Bindemittel eine Legierung aus Pech und feinteiliger backender Kohle eingesetzt wird, die eine Temperatur von über 100°C bis 200°C aufweist, daß der nichtbackende Kohlenstoffträger bei einer Mischungstemperatur, die im gleichen Temperaturbereich liegt, mit der Legierung gemischt wird und die Vorformlinge aus dieser Mischungstemperatur heraus brikettiert werden, und daß die Vorformlinge einer verfestigenden Wärmebehandlung unterworfen werden. Es versteht sich, daß die Brikettierung bei einer gegenüber der Mischungstemperatur reduzierten Brikettierungstemperatur erfolgt. Sie ist zum Beispiel um etwa 50°C niedriger als die Mischungstemperatur. Die verfestigende Wärmebehandlung kann eine Endtemperatur von über 400°C oder sogar über 450°C aufweisen. Bei dem erfindungsgemäßen Verfahren ist die Brikettierung, mit der die Vorformlinge hergestellt werden, eine Bindemittelbrikettierung, wie sie bei der Herstellung von Steinkohlenbriketts üblich ist. Insoweit kann die Technologie der bekannten Bindemittelbrikettierung angewendet werden. Im allgemeinen arbeitet man mit üblichen Brikettierpressen und Preßdrücken.

Überraschenderweise genügen bei Verwendung der angegebenen Bindemittelmischung und Einhaltung der angegebenen Parameter die hergestellten Brennstoff-Briketts auch in bezug auf das Langzeitverhalten allen Anforderungen, weil mit einer Bindemittelmischung gearbeitet wird, die als Pech/Kohle-Legierung ausgebildet ist. Von einer Pech/Kohle-Legierung wird im Rahmen der Erfindung dann gesprochen, wenn das Pech und die backende Kohle gleichsam ineinander in Lösung gegangen sind und dadurch eine Integration der beiden Bestandteile zu einem neuen Bindemittel stattgefunden hat. Das ist insbesondere dann leicht erreichbar, wenn mit ausreichend feinteiliger Kohle gearbeitet wird. In den Brennstoff-Briketts ist die Pech/Kohle-Legierung unempfindlich gegen eindiffundierende Luft und Feuchtigkeit. Sie ist sehr reaktiv. Ihre Reaktivität ist mit der der brikettierten Stoffe vergleichbar.

Im einzelnen bestehen im Rahmen der Erfindung mehrere Möglichkeiten der weiteren Ausbildung. So kommt man zu besonders guten Ergebnissen, wenn der nichtbackende Kohlenstoffträger, insbesondere also sandfeiner Koks, und die Bindemittelmischung bei der Mischung die gleiche Temperatur aufweisen und vorzugsweise mit einer Temperatur von etwa 160°C gearbeitet wird.

Während bei dem eingangs beschriebenen Verfahren (DE-OS 37 27 464) bei der verfestigenden Wärmebehandlung mit einem Drehrohrofen gearbeitet werden muß, kann erfindungsgemäß die Wärmebehandlung auch auf andere Weise, z. B. auf einem Wanderrost, erfolgen, welches durch einen entsprechenden Ofen oder eine entsprechende Kammer läuft und einschichtig oder mehrschichtig mit den Vorformlingen belegt wird. Eine bevorzugte Ausführungsform ist auch erfindungsgemäß dadurch gekennzeichnet, daß die Vorformlinge in einem Drehrohrofen der verfestigenden Wärmebehandlung unterworfen werden. Man kommt zu einer sehr schonenden Wärmebehandlung und zu hohen Endfestigkeiten, wenn der Drehrohrofen ein Mineralstoffbett aus feinkörnigen Mineralstoffen aufweist. Eine bevorzugte Ausführungsform der Erfindung, der besondere Bedeutung zukommt, ist dadurch gekennzeichnet, daß Vorformlinge hergestellt werden, deren spezifisches Gewicht durch Einstellung des Mischungsverhältnisses und der Verdichtung größer ist als das Schüttgewicht der feinkörnigen Mineralstoffe, und wenn diese Vorformlinge zum Zwecke der Wärmebehandlung in einen beheizten Drehrohrofen eingeführt werden, der so weit mit den feinkörnigen Mineralstoffen gefüllt ist, daß die Wärmebehandlung der Vorformlinge in einem Tauchbett erfolgt. Der feinkörnige Mineralstoff hat vorzugsweise eine Temperatur von etwa 500 bis 530°C, und zwar zumindest im Bereich des Austrittsendes des Drehrohrofens. Dabei wird der Drehrohrofen zweckmäßigerweise so weit mit den feinkörnigen Mineralstoffen gefüllt, daß das Mineralstoffvolumen größer ist als es dem doppelten Lückenvolumen in einer losen Schüttung der Vorformlinge entspricht. Im übrigen kann erfindungsgemäß insoweit auf die in der DE-OS 37 27 464 offenbarte Technologie zurückgegriffen werden. Die feinkörnigen Mineralstoffe können Sand, geschäumtes Perlite oder Vermiculite, aber auch feinkörniger Petrolkoks sein, wenn die Ofenatmosphäre dessen Verbrennung verhindert. Jedenfalls sollte dafür gesorgt werden, daß zu Beginn der Wärmebehandlung eine Temperatur herrscht, die sehr schnell flüchtige Bestandteile aus den Vorformlingen austreibt. Das austretende Gas schützt vor Oxidation.

Im Sinne einer Optimierung empfiehlt die Erfindung, mit einer Bindemittelmischung zu arbeiten, die, bezogen auf die Ausgangsmischung, aus der die Vorformlinge brikettiert werden, aus zumindest 7 Gew.-% Pech in Form von kohle- oder erdölstämmigem Pech, insbesondere Elektrodenpech, und aus zumindest 12 Gew.-% feinkörniger backender Kohle gebildet wurde. Vorzugsweise wird mit einer Bindemittelmischung gearbeitet, die 7 bis 12 Gew.-% Pech und 12 bis 14 Gew.-% feinkörnig backender Kohle aufweist. Vorzugsweise wird mit Petrolkoks oder einem anderen nichtbackenden Kohlenstoffträger einer Körnung von unter 2 mm bei zumindest 60 % unter 0,5 mm gearbeitet.

Die erfindungsgemäß hergestellten Brennstoff-Briketts zeichnen sich durch ihr Langzeitverhalten und durch ihr Verhalten bei der Verbrennung im Ofen aus. Im Rahmen der Erfindung liegt es, der Ausgangsmischung feinteiligen Kalkstein beizumischen, und zwar als Verbrennungsinhibitor. Dazu lehrt die Erfindung, daß mit einer Ausgangsmischung gearbeitet wird, die Petrolkoks, 3 bis 6 Gew.-% Kalkstein und die Bindemittelmischung aufweist. Vorzugsweise wird dabei mit Petrolkoks einer Körnung von unter 2 mm, bei zumindest 60 Gew.-% unter 0,5 mm, und mit Kalkstein einer Körnung von feiner als 0,5 mm gearbeitet. - Die erfindungsgemäß hergestellten Brennstoff-Briketts können auch im Kupolofen bei der Herstellung von Gußeisen als Kohlenstoffträger eingesetzt werden.

## Patentansprüche

1. Verfahren für die Herstellung von Brennstoff-Briketts, insbesondere für die Erzeugung von Heizwärme,
wobei ein nichtbackender feinkörniger Kohlenstoffträger, vorzugsweise Petrolkoks, und ein pechhaltiges Bindemittel gemischt werden sowie diese Ausgangsmischung zu Vorformlingen brikettiert wird und wobei aus den Vorformlingen durch eine verfestigende Wärmebehandlung die Brennstoff-Briketts gebildet werden,
**dadurch gekennzeichnet**, daß als pechhaltiges Bindemittel eine Legierung aus Pech und feinteiliger backender Kohle eingesetzt wird, die eine Temperatur von über 100 °C bis 200 °C aufweist,
daß der nichtbackende Kohlenstoffträger bei einer Mischungstemperatur, die im gleichen Temperaturbereich liegt, mit der Legierung gemischt wird und die Vorformlinge aus dieser Mischungstemperatur heraus brikettiert werden,
und daß die Vorformlinge einer verfestigenden Wärmebehandlung unterworfen werden.

2. Verfahren nach Anspruch 1, dadurch gekennzeichnet, daß der nichtbackende Kohlenstoffträger und die Bindemittelmischung bei der Mischung die gleiche Temperatur aufweisen.

3. Verfahren nach einem der Ansprüche 1 oder 2, dadurch gekennzeichnet, daß mit einer Temperatur von etwa 160 °C gearbeitet wird.

4. Verfahren nach einem der Ansprüche 1 bis 3, dadurch gekennzeichnet, daß die Vorformlinge in einem Drehrohrofen und Mineralstoffbett aus feinkörnigen Mineralstoffen der verfestigenden Wärmebehandlung unterworfen werden.

5. Verfahren nach Anspruch 4, dadurch gekennzeichnet, daß Vorformlinge hergestellt werden, deren spezifisches Gewicht durch Einstellung des Mischungsverhältnisses und der Verdichtung größer ist als das Schüttgewicht der feinkörnigen Mineralstoffe, und daß diese Vorformlinge zum Zweck der Wärmebehandlung in einen beheizten Drehrohrofen eingeführt werden, der so weit mit feinkörnigen Mineralstoffen gefüllt ist, daß die Wärmebehandlung der Vorformlinge in einem Tauchbett erfolgt.

6. Verfahren nach Anspruch 5, dadurch gekennzeichnet, daß der Drehrohrofen so weit mit feinkörnigen Mineralstoffen gefüllt wird, daß das Mineralstoffvolumen größer ist als es dem doppelten Lückenvolumen in einer losen Schüttung der Vorformlinge entspricht.

7. Verfahren nach einem der Ansprüche 1 bis 6, dadurch gekennzeichnet, daß mit einer Bindemittelmischung gearbeitet wird, die, bezogen auf die Ausgangsmischung, aus der die Vorformlinge brikettiert werden, aus zumindest 7 Gew.-% Pech in Form von kohle- oder erdölstämmigem Pech, insbesondere Elektrodenpech, und aus zumindest 12 Gew.-% feinkörniger backender Kohle gebildet wurde.

8. Verfahren nach Anspruch 7, dadurch gekennzeichnet, daß mit einer Ausgangsmischung gearbeitet wird, die Petrolkoks, 3 bis 6 Gew.-% Kalkstein und die Bindemittelmischung aufweist.

9. Verfahren nach Anspruch 8, dadurch gekennzeichnet, daß mit Petrolkoks einer Körnung von unter 2 mm, bei zumindest 60 Gew.-% unter 0,5 mm und mit Kalkstein einer Körnung von feiner als 0,5 mm gearbeitet wird.

## Claims

1. A process for the production of fuel briquettes, more particularly for space heating purposes,
in which a fine-grained non-caking carbonaceous material, preferably petroleum coke, is mixed with a pitch-containing binder and the initial mixture is compacted into briquette form, the raw compacts then being hardened into feul briquettes by a hardening heat treatment,
characterised in that the pitch-containing binder is a blend of pitch and finely divided caking coal, made and used at a temperature between 100°C and 200°C,
that the non-caking carbonaceous material is mixed with the blend at a mixin. temperature within the same range, and the raw compacts are produced at the same initial temperature,
and that the raw compacts are subjected to a hardening heat treatment.

2. A process as in Claim 1, characterised in that the non-caking cabonaceous material and the binder blend are at the same temperature when mixed.

3. A process as in either of Claims 1 and 2, characterised in that the working temperature is about 160°C.

4. A process as in any of Claims 1 to 3, characterised in that the raw compacts are subjected to the hardening heat treatment in a finely divided mineral bed inside a revolving tubular kiln.

5. A process as in Claim 4, characterised in that the mixing ratio and the degree of compaction are adjusted so that the bulk density of the raw compacts exceeds that of the finely divided mineral bed, the said raw compacts being heat treated inside a heated revolving tubular kiln sufficiently full of the finely divided bed materials to keep them immersed in the bed during the heat treatment.

6. A process as in Claim 5, characterised in that the revolving tubular kiln is sufficiently full of finely divided bed materials for the mineral material volume to exceed twice the volume of voids in a loose heap of raw compacts.

7. A process as in any of Claims 1 to 6, characterised in that the binder blend is prepared so that the initial mixture from which the raw compacts are produced will contain at least 7% by weight of pitch in the form of coaltar pitch or petroleum pitch, more particularly electrode pitch, and at least 12% by weight of finely divided caking coal.

8. A process as in Claim 7, characterised in that use is made of an initial mixture containing the petroleum coke, 3 to 6% by weight limestone and the binder blend.

9. A process as in Claim 8, characterised in that the petroleum coke is crushed to below 2 mm and at least 60% by weight below 0.5 mm, and the limestone is crushed to below 0.5 mm.

## Revendications

1. Procédé pour fabriquer des briquettes de combustible, notamment pour la production d'une chaleur de chauffage, selon lequel on mélange une substance porteuse de carbone non cokéfiant à grains fins, de préférence du coke de pétrole, et un liant contenant de la poix, et on transforme ce mélange de départ sous la forme d'ébauches de briquettes et à partir des ébauches on forme les briquettes de combustible au moyen d'un traitement thermique de consolidation, caractérisé en ce qu'on utilise comme liant contenant de la poix une masse alliée formée de poix et de charbon agglutiné finement divisé et qui possède une température supérieure à une valeur comprise entre plus de 100°C et 200°C,
qu'on mélange la substance de support de carbone non cokéfiante à la masse alliée, à une température de mélange située dans la même gamme de températures et qu'on amène les ébauches sous la forme de briquettes à partir de cette température de mélange, et
qu'on soumet les ébauches à un traitement thermique de consolidation.

2. Procédé selon la revendication 1, caractérisé en ce que la substance non cokéfiante de support de carbone et le mélange formant liant possède la même température lors du mélange.

3. Procédé selon l'une des revendications 1 ou 2, caractérisé en ce qu'on travaille avec une température d'environ 160°C.

4. Procédé selon l'une des revendications 1 à 3, caractérisé en ce qu'on soumet les ébauches placées dans un four tubulaire rotatif et un lit formé de substances minérales à grains fins au traitement thermique de consolidation.

5. Procédé selon la revendication 4, caractérisé en ce qu'on fabrique des ébauches dont le poids spécifique est supérieur au poids apparent des substances minérales à grains fins, grâce à un réglage du rapport de mélange et de la densification, et que pour réaliser le traitement thermique, on introduit ces ébauches dans un four tubulaire rotatif chauffé, qui est suffisamment rempli par des substances minérales à grains fins pour que le traitement thermique des ébauches s'effectue dans un lit d'immersion.

6. Procédé selon la revendication 5, caractérisé en ce qu'on remplit le four tubulaire rotatif avec des substances minérales à grains fins au point que le volume de substances minérales est supérieur à ce qui correspond au double du volume de vides dans une accumulation en vrac lâche des ébauches.

7. Procédé selon l'une des revendications 1 à 6, caractérisé en ce qu'on travaille avec un mélange formant liant qui, en pourcentages rapportés au mélange de départ à partir duquel les ébauches sont mises sous la forme de briquettes, a été formé avec au moins 7 % en poids de poix sous la forme de poix tirée du charbon ou du pétrole, notamment de la poix pour électrodes, et par au moins 12 % en poids de charbon agglutiné à grains fins.

8. Procédé selon la revendication 7, caractérisé en ce qu'on travaille avec un mélange de départ qui contient du coke de pétrole, 3 à 6 % en poids de calcaire et le mélange formant liant.

9. Procédé selon la revendication 8, caractérisé en ce qu'on travaille avec du coke de pétrole possédant une granulation inférieure à 2 mm, avec au moins 60 % en poids du coke de pétrole possédant une granulation inférieure à 0,5 mm et avec du calcaire ayant une granulation inférieure à 0,5 mm.
